# FASCICULE DE BREVET EUROPEEN

(11) **EP 0 695 788 B1**
(45) Date de publication et mention de la délivrance du brevet: **05.06.2002**
(21) Numéro de dépôt: 95401829.7
(22) Date de dépôt: 03.08.1995
(51) Int. Cl.: C08L 95/00, E01C 7/26

(54) **Procédé de fabrication d'une émulsion bitume/résine pour revêtement routier**
Verfahren zur Herstellung einer Bitumen-Harz-Emulsion für Strassenbelag
Process for the manufacture of a bitumen-resin emulsion for road coating

(30) Priorité: 05.08.1994 FR 9409771
(43) Date de publication de la demande: 07.02.1996
(73) Titulaire: COLAS S.A., 92653 Boulogne-Billancourt Cédex (FR)
(72) Inventeur: Durand, Graziella, F-92270 Bois-Colombes (FR); Poirier, Jean-Eric, F-78114 Cressely (FR); Godard, Eric, F-78180 Montigny-le-Bretonneux (FR)
(74) Mandataire: Michelet, Alain

(56) Documents cités:
- CH-A- 477 497
- FR-A- 2 366 342
- US-A- 3 324 041

## Description

La présente invention concerne un procédé de fabrication d'une émulsion aqueuse composite pour former une couche de roulement de surface de circulation à base d'un liant bitumineux et d'une résine. L'invention se rapporte également à des couches portantes obtenues par la mise en oeuvre de ce procédé.

Pour la fabrication de telles couches portantes de surface de circulation, on a jusqu'à présent utilisé des matériaux solubles dans des solvants organiques ce qui confère au revêtement ainsi formé une mauvaise résistance au kérosène, aux huiles organiques et aux hydrocarbures en général. Il est donc souhaitable d'utiliser des matériaux conférant aux revêtements résultants une excellente résistance chimique aux huiles organiques, au kérosène et aux hydrocarbures en général, en particulier pour les revêtements de routes, de sols industriels, de parkings, de garages à stations services et de pistes d'aéroports.

Les émulsions connues de l'art antérieur, formulées à cet usage contiennent une proportion importante de goudrons ou de tout autre produit issu de la houille et sont reconnues comme toxiques. Par produits toxiques, on entend dans la présente invention, un produit qui, de part les substances cancérigènes qu'il contient, doit être soumis à une classification et à un étiquetage selon la réglementation en vigueur actuellement en France.

A ce jour, les produits à base de bitume et de résine sont comptabilisés par l'adjonction d'un troisième composant qui est un solvant dont l'évaporation après application à chaud contribue à nuire à l'environnement.

Par ailleurs, le brevet EP-231417 décrit une résine époxy mélangée à une émulsion de bitume et à un agent réticulant aminé pour améliorer sa perméabilité à la vapeur d'eau et son adhérence au métal. Mais il s'agit là d'une composition destinée à modifier les caractéristiques de la résine, qui est sous forme pâteuse non émulsionnée et donc difficilement manipulable.

Le document FR-A-2366342 propose d'une part, une composition présentant les mêmes inconvénients et, d'autre part, un procédé de préparation d'une composition bitumineuse contenant une résine époxy.

La présente invention vise à pallier les inconvénients mentionnés plus haut en proposant une émulsion composite conférant à un revêtement formé une excellente résistance chimique aux huiles organiques, au kérosène et aux hydrocarbures en général, ne présentant aucune toxicité, ni en cours de fabrication, ni au cours de son application, ni pendant la durée de son service, et exempte de solvant et de tout autre substance susceptible de nuire à l'environnement.

Un autre but de l'invention est de proposer une émulsion composite pouvant être appliquée à froid sur une surface de circulation en chantier.

Pour ce faire, la présente invention a pour objet un procédé de fabrication d'une émulsion composite pour former une couche de roulement de surface de circulation comprenant un liant bitumineux et une résine.

L'émulsion composite selon la présente invention est donc une émulsion à base d'un liant bitumineux et de résine.

On entend par liant bitumineux un liant, soit constitué de bitume seul, soit modifié par l'addition d'un polymère, soit fluidifié par une huile. Ce terme est conservé lorsque à ce produit est incorporé un agent réticulant.

On désigne par résine toute entité chimique qui par réaction avec un agent réticulant approprié conduit à l'obtention d'un réseau moléculaire tridimensionnel. II s'agit de systèmes à deux composants. Ils sont choisis de telle sorte que ce système soit actif à température ambiante. Bien entendu, la nature de l'agent réticulant dépend de la nature de la résine employée. Ces résines sont de préférence des résines de type époxy ou acrylique.

Les résines de type époxy sont des résines liquides. Elles résultent de la réaction de molécules à fonctionnalité époxydique avec un composé chimique, qui est un agent réticulant à fonctionnalités aminées. Avantageusement, il s'agit de résines époxy linéaires. Elles sont classiquement obtenus par polycondensation en milieu alcalin d'un dérivé de bisphénol A et de l'épichlorhydrine. Ce dérivé est de préférence du diglycidyléther de bisphénol A. Des résines époxy plus souples peuvent être obtenues à partir de dérivés polyglycolés. On peut aussi utiliser, dans le cadre de l'invention, un mélange de deux ou plusieurs résines époxy différentes.

L'agent réticulant pour la résine époxy ou pour le mélange des résines époxy est de préférence actif à température ambiante. II est avantageusement choisi parmi les diéthylènes triamines et les triéthylènes tétramines, les polyamines aliphatiques, les polyamines cycloaliphatiques, les polyamino-imidazolines, et les polyaminoamines. En général, un seul agent réticulant est suffisant pour des mélanges de résines époxy. Cependant, il peut s'avérer plus avantageux d'en utiliser deux pour obtenir des caractéristiques optimales du mélange.

Les quantités de résine époxy linéaire et d'agent réticulant, mélangé à l'émulsion à base de liants bitumineux, sont choisies de telle sorte que ces deux composés soient mélangés dans des proportions stoechiométriques. C'est-à-dire que l'on met en présence une fonction époxyde de la résine avec un hydrogène actif de l'agent réticulant.

Les résines de type acrylique résultent de la réaction d'un prépolymère insaturé obtenu à partir de monomères de type acrylate avec un composé chimique qui est un catalyseur de réactions radicalaires (persulfate de sodium, persulfate d'ammonium).

Selon l'invention le liant bitumineux comporte un agent réticulant de la résine, ledit liant bitumineux et la résine étant chacun mis en oeuvre sous forme d'une émulsion dans l'eau.

Dans différents modes de réalisation, l'invention comporte les caractéristiques suivantes, éventuellement prises isolément ou selon toutes leurs combinaisons techniquement possibles:
- le rapport bitume/résine se situe entre 80/20 et 5/95,
- l'émulsion de résine comporte 30 à 70 parties en poids de résine ou de mélange de résines,
- l'émulsion de bitume contenant l'agent réticulant de la résine comporte 10 à 70 parties en poids de bitume,
- l'émulsion de bitume est de type anionique, cationique ou neutre, et l'émulsion de résine est une émulsion de type neutre, cationique ou anionique. Les émulsions ne sont pas de signes opposés. L'émulsion de bitume est de préférence cationique, l'émulsion de résine est de préférence neutre.
- les quantités d'agent réticulant et de résine sont voisines de la stoechiométrie,
- la résine est une résine époxy,
- dans ce dernier cas, l'agent réticulant est choisi parmi l'ensemble constitué par les diéthylènes triamines, les diéthylènes tétramines, les polyamines aliphatiques, les polyamines cycloaliphatiques, les polyamino-imidazolines et les polyaminoamides,
- la résine est un prépolymère acrylique,
- dans ce dernier cas, l'agent réticulant est un agent réticulant de type radicalaire.

L'invention a également pour objet un procédé d'obtention de l'émulsion composite telle que décrite ci-dessus, consistant à préparer une première émulsion de bitume à laquelle on ajoute un agent réticulant, et une deuxième émulsion de résine, puis à malaxer les deux émulsions de façon à obtenir un mélange définitif que l'on répand à froid sur une surface de circulation en chantier.

L'invention concerne aussi des couches portantes de surface de circulation obtenue par la mise en oeuvre de l'émulsion composite définie plus haut.

Selon différents modes de réalisation cette couche de roulement a la structure suivante:
- elle comporte un film constitué de l'émulsion composite définie plus haut;
- le film est recouvert d'une couche de gravillons;
- la couche de gravillons est recouverte d'un deuxième film constitué d'une émulsion composite;
- elle comporte des gravillons, du sable, des fines minérales et une émulsion, la proportion en masse de liant étant comprise entre 8% et 30%.

La formulation de l'émulsion composite selon l'invention résulte donc du mélange de deux émulsions distinctes.

La première émulsion est une émulsion de bitume cationique, anionique ou neutre, contenant l'agent réticulant de la résine et dont la teneur en bitume peut être comprise entre 10 et 70%. Cette émulsion est obtenue à partir d'un moulin colloïdal dans lequel sont mélangés intimement et cisaillées, une phase bitumineuse chauffée entre 110°C et 160°C, et une phase aqueuse contenant de l'eau, un système émulsifiant et l'agent réticulant, chauffé entre 20°C et 80°C. On pourrait également ajouter l'agent réticulant après avoir préparé l'émulsion de bitume.

La seconde émulsion est une émulsion de résine dans de l'eau, dont la teneur en résine est comprise entre 30 et 70%. Cette émulsion est de préférence neutre afin de se compatibiliser avec toute émulsion de bitume, quelle que soit sa nature. La résine est elle-même mise en émulsion avec un émulsifiant adéquat dépendant de sa nature. Par exemple, pour la résine de type époxy, l'émulsifiant peut être un agent tensioactif neutre époxydé ou tout autre agent tensioactif compatible avec la résine choisie.

Comme nous l'avons vu plus haut, l'agent réticulant est ajouté dans les proportions stoechiométriques aux fonctions réactives de la résine ou en léger excès, c'est-à-dire jusqu'à 10% en plus par rapport à la stoechiométrie.

Le rapport bitume/résine varie dans des proportions allant de 80/20 à 5/95, de préférence dans des proportions allant de 60/40 à 10/90.

Ce rapport, ainsi que le type d'agent réticulant choisi, détermine la maniabilité du mélange final. Cette maniabilité, à température ambiante, peut aller de quelques minutes à plusieurs heures. Pour une application en tant que revêtement en couche mince, une maniabilité de 1/2 h à 2 heures est recherchée. Le durcissement complet n'ayant lieu qu'une douzaine d'heures après. Pour une application en tant qu'enrobage, un temps de maniabilité plus long est recherché. Bien entendu, le temps de réticulation de la résine est d'autant plus rapide que la température est élevée.

Le rapport bitume/époxy et le type d'agent réticulant sont à ajuster selon la résistance chimique recherchée pour le revêtement.

Le rapport bitume/époxy et le type d'agent réticulant sont à ajuster également selon la souplesse voulue pour le revêtement. Un compromis est bien sûr à trouver en fonction de l'ensemble des propriétés recherchées pour l'application envisagée de ce matériau.

L'invention sera mieux comprise à la lumière des exemples de réalisation non limitatifs ci-après, dans lesquels on prépare une émulsion composite à partir d'une émulsion bitumineuse cationique, d'une résine époxy, et d'un agent réticulant.

### EXEMPLE 1

Une première émulsion est réalisée à partir de 231 g d'émulsion cationique bitumineuse à laquelle est ajoutée 32,5g d'un agent réticulant de type polyaminoamide à 25°C. L'émulsion cationique bitumineuse est connue sous la dénomination commerciale COLACID S 60. Ce mélange est agité puis dilué avec 21,5g d'eau.

Une seconde émulsion est préparée en mélangeant 40g d'eau et 6g de tensioactif époxydé auquel on ajoute sous agitation et à 60°C, 54g de résine époxyde connue sous la dénomination commerciale EPIKOTE 828 vendue par la société SHELL CHIMIE.

Le liant prêt à être appliqué résulte du mélange des deux émulsions après un malaxage de 15 minutes environ. La teneur en eau de ce mélange est de 40%.

Dans cet exemple le rapport bitume/époxy est de 60/40, ("époxy" représente l'ensemble résine époxy + tensioactifs + agent réticulant) et le rapport résine EPIKOTE 828/agent réticulant satisfait les proportions stoechiométriques qui sont de 65/35.

La viscosité de ce liant augmente fortement 2 h après réalisation du mélange. La prise est totale 24 h après le mélange.

### EXEMPLE 2

Une deuxième émulsion composite de même teneur en eau globale (40%) est réalisée en procédant comme pour l'exemple 1, mais en ajoutant l'agent réticulant en excès par rapport à la stoechiométrie. Le ratio époxy/agent réticulant est ici de 55/45. Le comportement de l'émulsion est le même que pour l'exemple 1.

Des tests de résistance au kérosène des deux émulsions 1 et 2 réalisées respectivement dans les exemples 1 et 2 ont été réalisés et comparés à ceux obtenus à partir d'une émulsion de goudron de même teneur en eau, et aussi à partir de l'émulsion de bitume classique COLACID S 60. Les résultats de ces tests sont indiqués dans le tableau ci-dessous dans lequel:
Le test d'étanchéité au kérosène consiste à mesurer le temps mis par le kérosène pour passer à travers un entonnoir du type Büchner dans lequel l'étanchéité du filtre a été réalisée par le produit à tester, sur une épaisseur de 2,5mm,
Le test de poinçonnement mesure l'écart entre la mesure de poinçonnement avant et après une attaque au kérosène de plaques d'enrobés recouvertes d'une couche mince de 1 kg/m² en produit sec constituée par chacun des revêtements à comparer. Le poinçonnement est réalisé sous une pression de 20 bars pendant un temps de 24 h en utilisant un poinçon de diamètre égal à 2,5 cm. Les plaques d'enrobés recouvertes de la couche mince sont attaquées au kérosène pendant un temps de contact de 7 jours.

| EMULSION | DUREE ETANCHEITE | POINCONNEMENT | PERTE DE MASSE |
|---|---|---|---|
| COLACID S 60 | 4 jours | 2,5 mm | > 90% |
| EMULSION N° 1 | 9 jours | 0,5 mm | 5% |
| EMULSION N° 2 | 9 jours | - | - |
| EMULSION GOUDRON | 9 jours | 0,3 mm | < 10% |

Les résultats montrent une efficacité approximativement identique vis-à-vis de la résistance à l'attaque par du kérosène des émulsions non toxiques conçues suivant l'invention et de l'émulsion toxique à base de produits de houille. Une très nette amélioration par rapport à une émulsion classique est enregistrée.

Les résultats montrent également qu'un excès d'agent réticulant par rapport aux proportions stoechiométriques n'est pas nécessaire.

L'émulsion composite ainsi définie constitue un liant résistant aux agressions chimiques. Ce liant peut être employé dans différents revêtements en fonction des propriétés recherchées. Les différents revêtements possibles sont les suivants.

Dans un premier type d'utilisation, on réalise un film mince de protection placé sur un enrobé bitumineux ou tout autre support à protéger contre des agressions chimiques. L'émulsion composite seule, après réaction chimique et réticulation constitue une protection mince de 0,1 à 2 mm d'épaisseur selon le dosage destiné à empêcher le contact entre l'agent agressif et le revêtement sous-jacent.

Dans un deuxième type de réalisation, un enduit gravillonné est constitué d'une couche d'émulsion composite formant liant, directement placée sur la surface à protéger, surmontée d'une couche de gravillons. Les dosages possibles pour le liant sont compris entre 500g et 3000g de mètre carré et les gravillons ont une taille comprise entre 1 et 25 mm selon le cas. Un tel enduit gravillonné assure la protection chimique, comme dans le cas précédent. Elle assure de plus une fonction mécanique dont les aspects principaux sont la protection à l'usure de la couche de liant et l'obtention d'une rugosité de la surface propre à limiter sa glissance.

Dans un troisième type d'utilisation, un enduit gravillonné scellé défini comme l'enduit gravillonné précédent est surmonté d'une nouvelle couche d'émulsion composite formant liant destinée à améliorer la protection contre les agents chimiques agressifs et à améliorer la stabilité mécanique des gravillons sous les contraintes de cisaillement élevées. Le dosage de cette seconde couche est compris entre 200 g et 2000 g d'émulsion composite par mètre carré.

Dans un quatrième type d'utilisation, on met en oeuvre une combinaison par superposition des trois types d'enduits tels que décrits précédemment, afin de constituer un revêtement aux performances mécaniques et de protection améliorées.

Dans un cinquième type d'utilisation, on réalise un coulis de protection constitué de gravillons (2 à 14 mm), de sables (0 à 6 mm), de fines minérales (< 0,1 mm) et éventuellement d'additifs tels que ciment hydraulique ou fibres minérales ou synthétiques et de l'émulsion composite dont la proportion dans le mélange peut être comprise entre 8% et 30% selon la granulométrie des autres composants. Il peut être nécessaire d'ajouter de l'eau. Un tel coulis est fabriqué en mélangeant par malaxage les différents constituants jusqu'à obtenir un produit de consistance fluide et en les répandant sur une épaisseur comprise entre 2 et 25 mm selon la formulation. Un tel coulis ne nécessite aucun compactage et peut être mis en service après la prise par réticulation des composants de l'émulsion. Sur des épaisseurs plus importantes, pouvant atteindre 200 mm, un compactage par vibration comparable à ce qui est pratiqué pour le béton de ciment est nécessaire.

Dans un sixième type d'utilisation, un enrobé à froid est composé de gravillons de taille comprise entre 2 et 25 mm, de sable de taille comprise entre 0 et 6 mm, de fines minérales de taille inférieure à 0,1 mm et d'éventuels additifs tels que ciment hydraulique, fibres minérales ou synthétiques, d'émulsion composite et éventuellement d'eau. Cet enrobé est formulé de telle sorte que le mélange obtenu par malaxage soit compactable et puisse être mis en oeuvre sur des épaisseurs comprises entre 20 et 200 mm avec des moyens classiques de travaux publics tels qu'un finisseur et compacté avec des rouleaux lisses, vibrants ou à pneumatique.

## Revendications

1. Procédé de fabrication d'une émulsion aqueuse composite applicable à froid destinée à former une couche de roulement de surface de circulation et comprenant un liant bitumineux, une résine époxy linéaire dans un rapport bitume/résine allant de 60/40 à 10/90, un polyaminoamide en tant qu'agent de réticulation en une quantité stoechiométrique par rapport à la résine,
**caractérisé en ce que**:
• le liant bitumineux est émulsifié dans de l'eau,
• l'agent réticulant est incorporé au liant bitumineux,
• la résine époxy est émulsifiée dans de l'eau,
• la première émulsion comprenant le liant bitumineux et l'agent réticulant est mélangée avec la seconde émulsion comprenant la résine époxyde sont mélangées pour obtenir l'émulsion aqueuse composite.

2. Couche de roulement de surface de circulation résistante aux hydrocarbures, **caractérisée en ce qu'**elle comporte un film constitué d'un liant obtenu par la mise en oeuvre du procédé selon la revendication 1.

3. Couche de roulement de surface de circulation selon la revendication 2, **caractérisée en ce que** le film est recouvert d'une couche de gravillons.

4. Couche de roulement de surface de circulation selon la revendication 3, **caractérisée en ce que** la couche de gravillons est recouverte d'un second film constitué du liant obtenu par la mise en oeuvre du procédé selon la revendication 1.

## Patentansprüche

1. Herstellungsverfahren für eine zusammengesetzte wässrige Emulsion, die kalt aufgetragen werden kann und dazu bestimmt ist, eine Fahrbahndeckschicht zu bilden, und die ein bituminöses Bindemittel, ein lineares Epoxydharz in einem Verhältnis Bitumen/Harz von 60:40 bis 10:90 und ein Polyaminamid als Vernetzungsmiffel in einer stöchiometrischen Menge in Bezug auf das Harz enthält,
**dadurch gekennzeichnet, dass**
• das biturninöse Bindemittel in Wasser emulgiert wird,
• Vernetzungsmittel in das bituminöse Bindemittel eingebracht wird,
• das Epoxydharz in Wasser emulgiert wird
• die erste Emulsion, die das bituminöse Bindemittel und das
Vernetzungsmittel enthält, mit der zweiten Emulsion, die das Epoxydharz enthält, vermischt wird, um die zusammengesetzte wässrige Lösung zu erhalten.

2. Fahrbahndeckschicht, die Kohlenwasserstoffen standhält, **dadurch gekennzeichnet, dass** sie einen Film aufweist, der aus einem Bindemittel besteht, das durch Anwenden des Verfahrens nach Anspruch 1 hergestellt ist.

3. Fahrbahndeckschicht nach Anspruch 2, **dadurch gekennzeichnet, dass** der Film mit einer Kiesschicht bedeckt ist.

4. Fahrbahndeckschicht nach Anspruch 3, dadurch gekennzeichnef, dass die Kiesschicht mit einem zweiten Film bedeckt ist, der aus einem Bindemittel besteht, das durch Anwenden des Verfahrens nach Anspruch 1 hergestellt ist.

## Claims

1. A method of manufacturing a cold-applicable compound aqueous emulsion intended to form an upper layer blanket and comprising a bituminous binder, a linear epoxy resin in a bitumen/resin ratio ranging from 60/40 to 10/90, a polyaminoamide as a cross-linking agent in stoichiometric quantity with respect to resin,
**characterised in that**:
• the bituminous binder is emulsified in water,
• the cross-linking agent is incorporated into the bituminous binder
• the epoxy resin is emulsified in water,
• the first emulsion comprising the bituminous binder and the cross-linking agent is mixed with the second emulsion comprising the epoxy resin to obtain the compound aqueous emulsion.

2. An upper layer blanket resisting to carbohydrates, **characterised in that** it comprises a film composed of a binder obtained by implementing the process according to claim1.

3. An upper layer blanket according to claim 2, **characterised in that** the film is covered with a chipping layer.

4. An upper layer blanket according to claim 3, **characterised in that** the chipping layer is covered with a second film composed of the binder obtained by implementing the process according to claim 1.
